# EUROPEAN PATENT APPLICATION

(11) **EP 1 382 393 A2**
(43) Date of publication of application: **21.01.2004**
(21) Application number: 03014163.4
(22) Date of filing: 24.06.2003
(51) Int. Cl.: B01L 3/02

(54) **Solution for substrate spotting and spotting method**

(30) Priority: 27.06.2002 JP 2002187711
(71) Applicant: DNA Chip Research Inc., Yokohama-shi, 230-0045 Kanagawa (JP); Hitachi Software Engineering Co., Ltd., Yokohama-shi, Kanagawa 230-0045 (JP)
(72) Inventor: Komatsu, Yasuo, c/o DNA Chip Research Inc., Yokohama-shi, Kanagawa 230-0045 (JP); Matsubara, Kenichi, c/o DNA Chip Research Inc., Yokohama-shi, Kanagawa 230-0045 (JP); Ohtsuka, Eiko, c/o DNA Chip Research Inc., Yokohama-shi, Kanagawa 230-0045 (JP); Nonaka, Ken, c/o DNA Chip Research Inc., Yokohama-shi, Kanagawa 230-0045 (JP); Yurino, Noriko, Hitachi Software Engineering CoLtd, Tokyo 140-0002 (JP)
(74) Representative: Liesegang, Roland, Dr.-Ing.

(57) **Abstract**

A solution for substrate spotting and spotting method for immobilizing a biological substance or various chemical substances on a substrate at high density. The solution for substrate spotting and the spotting method involve mixing a solution comprising a biological substance or chemical substance to be spotted with a solution to which an inorganic fine powder has been added as a surface tension regulating agent.

## Description

### TECHNICAL FIELD

The present invention relates to a solution for substrate spotting and a spotting method for immobilizing various chemical substances including biological substances and medicaments on fixed substrates including glass, plastic, ceramics, and the like.

### BACKGROUND ART

A glass substrate on which gene-derived DNA is immobilized is referred to as a DNA chip, which has become a means for analyzing gene expression patterns in organisms. These DNA chips include cDNA chips where long chain PCR products are immobilized on a substrate and oligonucleotide chips where synthetic single chain oligonucleotides having chain lengths of 100 bases or less are immobilized. For the latter type of oligonucleotide chip, methods involving synthesis onto the substrate are also being performed. However, because synthetic oligonucleotides are not purified, oligonucleotide synthesis on a substrate has a disadvantage that it inferior in terms of purity. Here, there is a method of spotting onto a substrate after purification of synthetic oligonucleotides. This spotting method is a method that is also used in cDNA chips, and is effective in cases where the number of analytes is not great, or where immobilizing oligonucleotides of high purity.

For spotting nucleic acid or protein onto a substrate, there is method of spotting involving pins with very finely manufactured tips or an ink jet method. In either case, where a spot droplet spotted on a substrate spreads too much, spotting many types of substance at high density becomes impossible. Until now, mixing with organic solvents, or solutions with increased saline strength have been used as spotting solutions. However, in either case, a spotted droplet did not have a sufficiently small internal diameter.

Given the above background, it is an object of the present invention to provide a solution for substrate spotting and a spotting method for immobilizing biological substances or various chemical substances on a substrate at high density.

### DISCLOSURE OF THE INVENTION

The present inventors, as a result of deliberate research, found that the above problem could be solved by addition of a specific surface tension regulating agent to the spotting solution, thereby completing the present invention.

Firstly, the solution for substrate spotting according to the present invention is obtained by mixing a solution comprising a biological substance or chemical substance to be spotted, and a solution to which an inorganic fine powder has been added as a surface tension regulating agent.

Secondly, the spotting method according to the present invention involves spotting on a surface of a substrate a spotting solution obtained by mixing a solution of a biological substance or a chemical substance and a solution to which an inorganic fine powder has been added as a surface tension regulating agent.

In the present invention, an inorganic fine powder used as a surface tension regulating agent, by increasing surface tension of a spotting solution when added thereto, inhibits spreading of a spot to the vicinity thereof, thus allowing evaporation/drying of the solution in a spot circle having a radius nearly the same as that immediately after spotting.

Properties of an inorganic fine powder preferable as a surface tension regulating agent include: that it is a powder such that it is not a hindrance to measurement when measuring a biological substance or chemical substance after spotting; that it is white or has a hue close to white such that it does not cause measurement error when measuring a biological substance or chemical substance; that it has few impurities such that it is non-reactive with the biological substance or chemical substance; and that it has a high specific gravity such that it combines with surface tension to prevent spreading of a spot.

Preferable examples of an inorganic fine powder to be used in the present invention include silicon oxide fine powder, and in particular, silica gel. Another preferable example is a fine powder of aluminium oxide. Further examples include fine powders of titanium oxide, lead titanate, zirconium oxide, zinc sulfide, antimony oxide, zinc oxide, white lead, Lithopon, basic zinc carbonate, magnesium oxide, precipitated barium sulfate, calcium sulfate (anhydrous, dihydrate), talc, calcium carbonate, kaolin clay, mica, magnesium hydroxide, bentonite, dolomite, calcium carbonate, basic magnesium carbonate, hydrated calcium silicate, wet process white carbon, etc.

An inorganic fine powder used in the present invention preferably has a particle size of less than 2000µm, from the viewpoint of solubility. A particle size exceeding 2000µm interferes with post-spotting measurement. A particle size of the inorganic fine powder of from 100 to 400µm is particularly preferable. Similarly, it is preferable in terms of solubility for an inorganic fine powder to have a mesh number of 1 to 400.

Where silica gel is used as an inorganic fine powder, it is preferable that it be porous with a pore size of 10 to 1000Å.

Specific examples of a silica gel include Wako Gel c300 (a product name of Wako Pure Chemical Industries, Ltd.).

In the present invention, preferable examples of a biological substance to be spotted include nucleic acid, protein, saccharide, glycoprotein, blood and body fluid, etc. Further, preferable examples of a chemical substance include a medicament and an environmentally harmful substance, etc. Environmentally harmful substance refers to an environmental hormone or dioxin, etc.

In the present invention, a substrate to be spotted with a solution for spotting is selected from a plate of glass, plastic, or ceramic, and beads of glass, plastic, or ceramic.

### BRIEF DESCRIPTION OF THE DRAWINGS

In Figure 1, A is a spotting solution of carbonate buffer, B is a spotting solution of carbonate buffer + 50% saturated silica gel solution, C is a spotting solution of carbonate buffer + 25% saturated silica gel solution.
Figure 2 is a schematic overview of the Examples.

### BEST MODE FOR CARRYING OUT THE INVENTION

Below, the present invention is explained by way of Examples.

### Example 1

Wako Gel c300 (a product name of Wako Pure Chemical Industries, Ltd.) was dissolved in sterilized water to prepare a saturated solution. One milliliter of this saturated solution was mixed with an equal amount of 0.5M carbonate buffer (pH9.0) to prepare a spotting solution. The following 5' end-aminated oligonucleotide (1) (20µM, 10µL): was mixed with spotting solution (10µL) and spotted onto a slide glass with spotter (SPBIO2000, a product name of Hitachi Software Engineering; SPBIO is a registered trademark).

### Example 2

Silica gel (pH value 7.0) was dissolved in sterilized water to prepare a saturated solution. One milliliter of this saturated solution was mixed with an equal amount of 0.5M carbonate buffer (pH9.0) to prepare a spotting solution. 5' end-aminated oligonucleotide (1) (20µM, 10µL) was mixed with the spotting solution (10µL) and this was spotted onto a slide glass by a spotter (SPBIO2000, product name of Hitachi Software Engineering; SPBIO is a registered trademark).

### Example 3

Aluminium oxide (Alumina) was dissolved in sterilized water to prepare a saturated solution. One milliliter of this saturated solution was mixed with an equal amount of 0.5M carbonate buffer (pH9.0) to prepare a spotting solution. 5'-End aminated oligonucleotide (1) (20µM, 10µL) was mixed with the spotting solution (10µL) and this was spotted on a slide glass by a spotter (SPBIO2000, a product name of Hitachi Software Engineering; SPBIO is a registered trademark).

### Example 4

Filter paper was placed in a tight box, wetted with 300mM disodium hydrogen phosphate-water solution, and slide glasses spotted in Example 1, 2 or 3 were placed therein such that the solution did not adhere thereto. The tight box was sealed and allowed to stand at 37°C. After 16 hours, slide glass was removed from the tight box for blocking the surface of the slide glass.

### Example 5: Blocking of oligonucleotide-spotted glasses

The slide glasses were washed with 0.1% Triton X (200mL) at room temperature for 5 minutes, with 0.05% HCl-water solution (200mL) at room temperature for 2 minutes, with 0.1M KCl (200mL) at room temperature for 10 minutes, and with sterilized water (200mL) at room temperature for 1 minute.

Next, blocking was performed by immersing the glasses in 1M Tris-glycine solution (pH=9.0) or 1M ethanolamine, and stirring for 1 hour at room temperature. The glasses were washed with sterilized water, followed by drying in a draft, and refrigeration.

### Example 6 (Hybridization with a Cy5-labeled oligonucleotide)

The following chemically synthesized Cy5-labeled oligonucleotide (2)(0.2µM): dissolved in 5 × SSC, 0.5% SDS, was placed on slide glass prepared in Examples 1 and 2, thereafter, a cover glass was placed over the solution, and this was allowed to stand for 2 hours at room temperature.

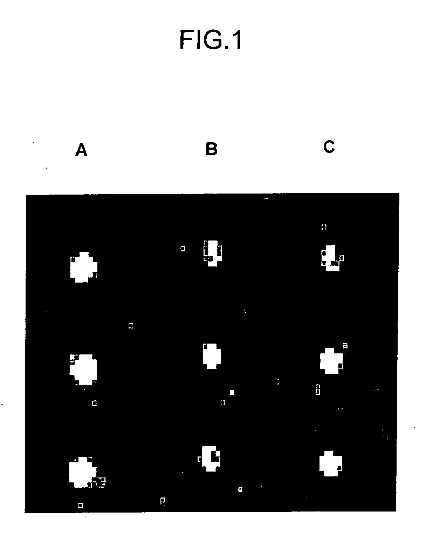

After hybridization, chips were washed with 4 × SSC, 0.1% SDS for 5 minutes, and then 2 × SSC, 0.1% SDS for 10 minutes. After drying, detection was performed with a chip scanner (Scan Array, a product name of A Packard BioScience Company). Detection results are shown in Fig. 1. Fig. 1A, B, C are for hybridization with oligonucleotide (1) and Cy5 oligonucleotide (2) spotted by dissolving in different spot solutions. Each of these were dissolved in the same solution and spotting performed 3 times. Figure 1A is the case of a carbonate buffer spotting solution, B is the case of a carbonate buffer +50% saturated silica gel solution spotting solution, and C is the case of a carbonate buffer + 25% saturated silica gel solution spotting solution.

From Fig. 1 it is clear that there was little spreading or seepage in the case of a spot solution to which silica gel solution had been added.

Another Example is shown below.

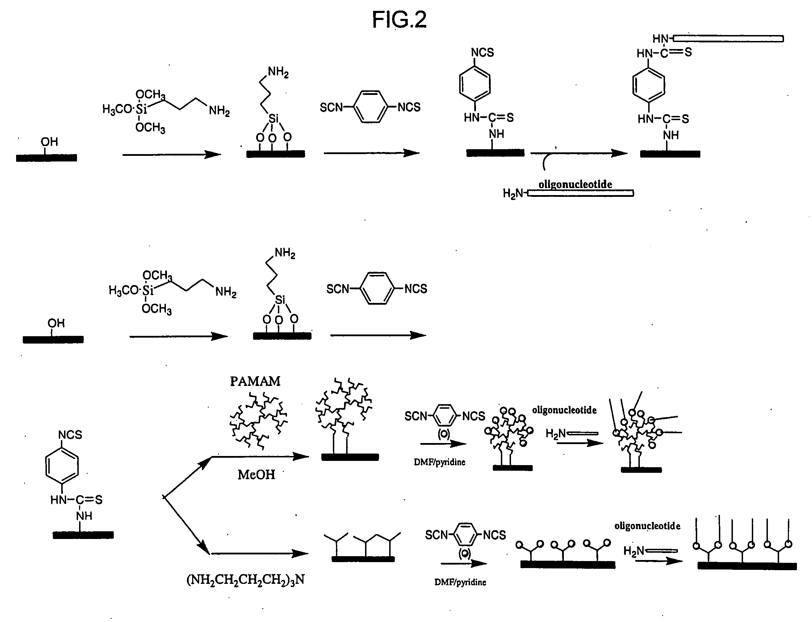

Figure 2 is a schematic overview of this Example.

### Example 7 Washing slide glasses

Slide glasses (10 to 20 slides) were immersed for 15 minutes in 10% sodium hydroxide-water solution (200mL), and then washed with water (200mL) and 1 % HCl-water solution (200mL) in that order. The slide glasses were then immersed in methanol (200mL), subjected to ultrasonic wash for 5 minutes, dried by centrifugation, and further dried at 180°C for 3 hours.

### Example 8: Aminopropyl silanation

The dried slide glasses were immersed in 3-aminotrimethoxy silane (13mL), water (8mL), methanol (380mL), and stirred for at least 5 hours at room temperature. Thereafter, the slide glasses were removed, washed twice with methanol (200mL), and after centrifugation dried for 3 hours at 180°C.

### Example 9: Isothiocyanation

1,4-Phenylene diisothiocyanate (1836mg) was first dissolved in 10% pyridine/dimethyl formamide solution (190mL), the slide glasses were placed therein, and stirred for 16 hours at room temperature. The slide glass was taken out, washed in dimethyl formamide (200mL), dichloro methane (200mL) and methanol (200mL) in that order, dried under reduced pressure and made available for isothiocyanation in Example 10.

### Example 10: Dendrimerization

The following reaction was performed using PAMAM (Aldrich) as a dendrimer: Slide glasses aminated in Example 3 were placed in a glass vessel and 10% PAMAM methanol solution (130µL) was dripped thereonto. The vessel was sealed and reaction allowed to proceed for 5 hours at 37°C. Thereafter, the slide glasses were washed twice with methanol (200mL), washed once with acetone (200mL), and dried under reduced pressure for 1 hour.

### Example 11: Isothiocyanation after dendrimer coating

The slide glass obtained in Example 10 was isothiocyanated by performing the same reaction as in Example 9, and made available for oligonucleotide spotting.

### Example 12

The slide glass obtained in Example 9 was laid out in a glass vessel, and 20 or 30% Tris (3-aminopropyl) amine/methanol solution (130µL) was dripped thereonto. The vessel was sealed, and reaction allowed to continue for 5 hours at 37°C. Thereafter, the slide glasses were washed twice with methanol (200mL), once with acetone (200mL) and then dried under reduced pressure for 1 hour.

### Example 13: Isothiocyanation after 3-aminopropyl amine coating

The slide glasses obtained in Example 12 were isothiocyanated by performing a reaction similar to that of Example 9, and these were used for spotting of oligonucleotides.

### Example 14: Spotting of oligonucleotides onto slide glass and binding reaction

An oligonucleotide library (80pmol; MWG manufactured by Biotech AG) was dissolved in sterilized water (4µL), and mixed with spot solution (4µL; 1M carbonate buffer (pH9.0): saturated Wako gel C-300 (product name of Wako Pure Chemical Industries, Ltd)-water solution =1:1) and spotted onto the coated slide glass obtained in Example 11 & 13 by a spotter (SPBIO2000, a product name of Hitachi Software Engineering; SPBIO is a registered trademark). After spotting, a filter paper was laid out in a tight box and wetted with 300mM disodium hydrogen phosphate-water solution. Spotted slide glasses were then placed in the tight box in a manner such that the solution did not adhere thereto and then the tight box was sealed. After allowing to stand at room temperature for 16 hours, slide glasses were removed from tight box for blocking the surface of the slide glasses.

### Example 15 Blocking of oligonucleotide spotglass

Slide glasses were washed with 0.1 % Triton X (200mL) at room temperature for 5 minutes, with 0.05% HCl aqueous solution (200mL) at room temperature for 2 minutes, with 0.1M KCl (200mL) at room temperature for 10 minutes, and with sterilized water (200mL) at room temperature for 1 minute wash.

Next, blocking was performed by immersing the glasses in a 1M Tris-glycine solution (pH=9.0) or 1M ethanolamine, and stirring for 1 hour at room temperature. The glasses were then washed with sterilized water, dried in a draft, and refrigerated.

### (Reference Example) Reverse transcription reaction

### Reverse transcription reaction using fluorescence labeled oligoribonucleotide

Total RNA (100µg) derived from mouse liver was dissolved in oligo dot primer (2µL; 0.5µg/µL) for reverse transcription reaction and sterilized water to a total volume of 30µl, and this was heated at 70°C for 5 minutes, and 42°C for 2 minutes. Thereafter, a pre-prepared solution comprising a pigment (50µL; reverse transcription reaction buffer (×5, 250mM Trish pH8.3, 375 mom Cl, 15 mom McGill₂, 50 mom DTT: 16µL), 0.1M dithiothreitol (8µL), 10 × dNTP solution (8µL; 2mM dTTP, 5mM dATP, 5mM dCTP, 5mM dGTP), 1mM Cy3-dUTP or Cy5-dUTP (8µL), Raze inhibitor (10µL; 40units/µL)) was mixed with the RNA solution. Next, a reverse transcription enzyme (1µL, 200units; Superscript II RNase H;GIBCOBRL) was added, and the solution was heated at 42°C. After 1 hour, a further 0.5µL of the above reverse transcription enzyme was added, and reaction was allowed to proceed for 1 hour at 42°C. To this reaction solution, sterilized water (40µL), 0.5M EDTA (10µL) and 1N NaOH (20µL) were added, and heating performed at 65°C for 30 minutes. 1M Tris-HCl (pH7.5; 50µL) and 1N HCl (15µL) were added to neutralize, and the solution was cooled with ice. After performing ethanol precipitation, sterilized water (50µL) was added, and desalting was performed with Microcon P30 (product name of BIO RAD).
The eluate was concentrated with Speed Vac.

### Example 16 Hybridization with cDNA prepared from mouse liver mRNA

20 x SSC (10µL), 10% SDS (0.4µL), and sterilized water was added to the fluorescence labeled cDNA prepared in accordance with the Reference Example to prepare a total amount of 40µL of probe solution. After gently placing this probe DNA solution on the DNA chip, a cover glass was placed on the solution, and this was allowed to stand for 16 hours at 40°C.

After hybridization, the chips were washed for 10 minutes with 1xSSC-0.05% SDS solution (40°C), and then washed respectively with 0.2 x SSC (200mL) and 0.05 × SSC (200mL) at room temperature. After drying, detection was performed with a chip scanner (Scan Array, a product name of A Packard Bioscience Company). Cy3-dUTP or Cy5-dUTP-labeled cDNA was prepared from mouse liver-derived RNA, and result of analysis by oligonucleotide chip were results for detected wavelength: green for Cy3 and red for Cy5.

### Example 17: Confirmation of immobilization of oligonucleotides onto slide glass

Sterilized water was added 1mM Cy5-dUTP (4µL), dimethylsulfoxide (4µL), 25 mM cobalt chloride solution (4µL), reaction buffer (×5, 1M potassium cacodylate, 25mM Tris-HCl, 1.25mg/BSA, pH6.8; 8µL) and terminal transferase (50units) to prepare a reaction solution having a total volume of 40µL. The entire amount was dripped onto a slide glass immediately thereafter. A cover glass was placed over the reaction solution, which was allowed to stand at 37°C. After 15 minutes, this was washed with 4 × SSC buffer (0.6M NaCl 0.12M citric acid dihydrate), 0.1% SDS solution, and 50% methanol-water solution, dried, and measurement performed with a detector (ScanArray).

### INDUSTRIAL APPLICABILITY

By the solution for substrate spotting and the spotting method according to the present invention, spreading and seeping of a spot is inhibited enabling biological substances or various chemical substance to be immobilized on a substrate at high density.

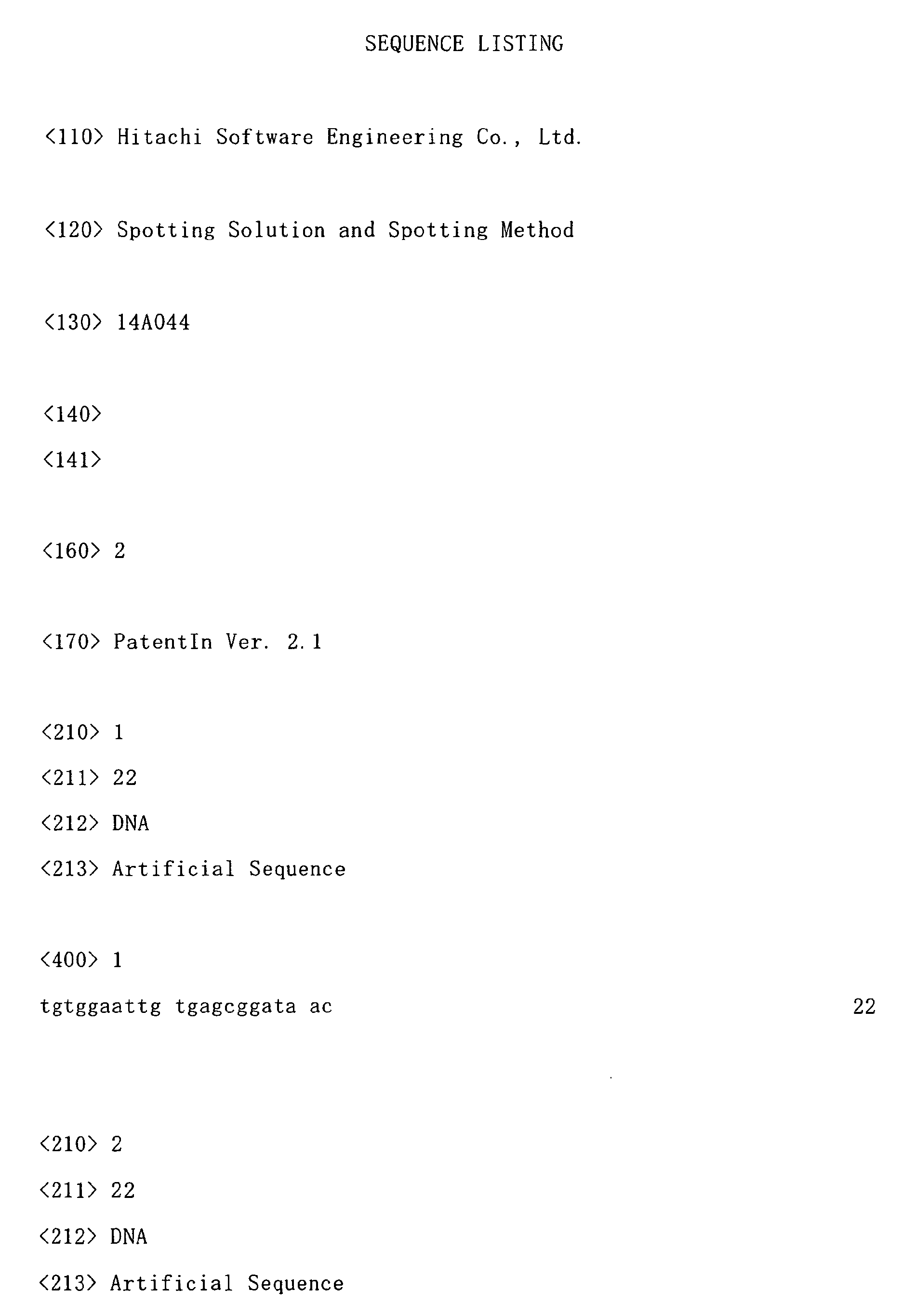

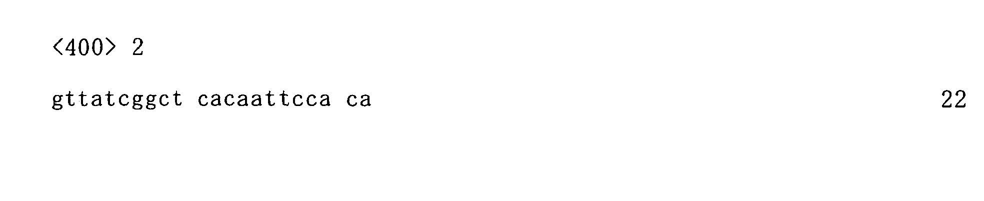

## Claims

1. A solution for substrate spotting obtained by mixing a solution comprising a biological substance or chemical substance to be spotted, and a solution to which an inorganic fine powder has been added as a surface tension regulating agent.

2. A solution for substrate spotting according to claim 1, wherein the inorganic fine powder is a fine powder of silicon oxide.

3. A solution for substrate spotting according to claim 2, wherein the fine powder of silicon oxide is silica gel.

4. A solution for substrate spotting according to claim 1, wherein the inorganic fine powder is a fine powder of aluminium oxide.

5. A solution for substrate spotting according to any one of claims 1 to 4, wherein the biological substance is selected from a group consisting of nucleic acid, protein, saccharide, glycoprotein, blood and body fluid.

6. A solution for substrate spotting according to any one of claims 1 to 4, wherein the chemical substance is selected from a group consisting of medicament, environmentally hazardous materials.

7. A solution for substrate spotting according to any one of claims 1 to 6, wherein the substrate is selected from a group consisting of a substrate made of glass, plastic or ceramic and beads made of glass, plastic or ceramic.

8. A spotting method comprising spotting a spot solution obtained by mixing a solution comprising a biological substance or chemical substance to be spotted, and a solution to which an inorganic fine powder has been added as a surface tension regulating agent.

9. A spotting method according to claim 8, wherein the inorganic fine powder is a fine powder of silicon oxide.

10. A spotting method according to claim 9 wherein the fine powder of silicon oxide is silica gel.

11. A spotting method according to claim 8 wherein the inorganic fine powder is a fine powder of aluminium oxide.

12. A spotting method according to any one of claims 8 to 11, wherein the biological substance is selected from a group consisting of nucleic acid, protein, saccharide, glycoprotein, blood and body fluid.

13. A spotting method according to any one of claims 8 to 11, wherein the chemical substance is selected from a group consisting of a medicament and an environmentally hazardous substance.

14. A spotting method according to any one claims 8 to 13 wherein the substrate is selected from a group consisting of a plate of glass, plastic or ceramic and beads of glass, plastic or ceramic.
